(19) Europäisches Patentamt / European Patent Office / Office européen des brevets

(11) **EP 2 980 549 A1**

(12) **EUROPEAN PATENT APPLICATION**

(43) Date of publication:
03.02.2016 Bulletin 2016/05

(51) Int Cl.:
*G01K 7/14* (2006.01)

(21) Application number: 14178727.5

(22) Date of filing: 28.07.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Electrolux Appliances Aktiebolag**
**105 45 Stockholm (SE)**

(72) Inventors:
• **Faraldi, Paolo**
  **47122 Forli (IT)**
• **Valpiani, Nicola**
  **47122 Forli (IT)**

(74) Representative: **Röder, Richard et al**
**Electrolux Hausgeräte GmbH**
**Group Patents**
**90327 Nürnberg (DE)**

(54) **Cooking appliance comprising an electrical adapter**

(57)     A Cooking appliance (12), in particular an oven, comprising an electrical adapter (13), the electrical adapter (13) comprising
a) an electrical signal input (2) for receiving at least one analog voltage input signal from a temperature sensor, particularly a meat thermometer,
b) an electrical signal output (4) for providing an analog voltage output signal to an appliance (12), particularly a kitchen stove, and
c) an electrical signal converter (3) for converting the input signal to the output signal, the signal converter (3) electrically connected to both the signal input (2) and the signal output (4) and configured such that the output signal is inversely proportional to the input signal.

## FIG 1

## Description

The present invention relates to a cooking appliance, in particular an oven, comprising an electrical adapter, a temperature probe for a cooking appliance and a method for electrically adapting a temperature sensor to an appliance.

Sous-vide cooking is a well-established technique for professional cooks that is growing in popularity and application also for the private households. Sous-vide is French for "under vacuum" and describes a method of cooking in vacuum sealed plastic pouches at low temperatures for long times. However, sous-vide typically comprises of three stages: preparing for packaging, cooking and finishing, wherein particularly a uniform heating during cooking is desired and thus a relatively tight temperature control is desired. A typical sous-vide cooking cycle comprises the steps of heating, wherein a temperature target should ideally be reached with no or minimum overshoot ($< 2\,°C$) for oven centre temperature; and maintenance, wherein the heat input in the cavity (hence of the food) is controlled, e.g. by controlling the activation of a steam generator.

In order to meet the requirement of a relatively tight temperature control of the oven cavity and, particularly the piece of food contained therein, food probes have been established as a standard accessory for sous-vide cooking and other conventional cooking methods. Such temperature probes, especially in connection with high end ovens, are provided to perform an assisted cooking using the temperature measured by the respective probe to terminate the cooking process, adjust the temperature and/or cooking cycle or the like.

Basically such food probe is plugged into the related socket by the user, preferably in the oven front, and afterwards the needle of the probe is inserted into the food to be cooked. Finally, the requested function is chosen, e.g., the oven set temperature (OST) and/or the food probe set temperature (FST). Depending on the function selected, the system in general performs a continuous measurement of the temperature using the food probe and, usually dependent on the temperature read from the food probe, the cooking process will be adapted according to this data, e.g., by changing the heating setup or switching off the oven when the food probe measures the user temperature, or the like.

For conventional oven appliances a food probe needle is known with a diameter of about 3.7 mm with a NTC- or so called "negative temperature coefficient"-sensor due to measure the temperature, basically a resistor reducing its resistance value when the temperature rises. However, there is a problem when using such probe for sous-vide cooking, particularly because the diameter of the needle is too big and will not preserve a vacuum in the bag containing the piece of food to be cooked.

Therefore, and in order to use a food probe in sous-vide application a special type of food probe is known having a smaller diameter of about only 1.05 mm.

Additionally, probe pads are usually used assisting the preservation of the vacuum in the sous-vide bag. Contrary to the NTC-sensor probes and due to their relatively small diameter, such sous-vide probes use thermocouples to measure the temperature, producing a voltage when the temperature is raised.

According to Ohm's law, according to which the current passing through a conductor between two points is directly proportional to the potential difference across the two points, wherein using the resistance as a constant of proportionality, said relationship is described as potential difference is current multiplied with resistance.

According to the NTC sensor usually used as a standard food probe, the temperature of the probe is detected as resistance value or ohmic value, whereas according to the thermocouples sensors usually used as a probe for sous-vide cooking the temperature of the probe is detected as a voltage value.

It will also be understood that in both applications outlined above an electronic control is used to detect the temperature of the probe by measuring an analog voltage signal.

Those measures are easily done by using analog to digital converter, also referred to herein as ADC, channels of many commonly used microcontrollers. However, each measure needs a specific circuit in order to interface the sensor with the electronic control.

However, the basic problem is that the system designed to work with the standard food probe cannot work with the sous-vide one and vice versa, and thus there is a problem in that it is not possible to work with both probe settings without duplicating the input stage of such system.

The document FR 2 877 085 A describes a temperature sensor with an analog-to-digital converter, which allows for a wireless transmission of the signal. However, this document does not disclose a solution to the above problems.

The document US 5 705 792 A1 describes a temperature sensing system, which includes a temperature probe and a signal conditioning circuit. The circuit converts the resistance measurements from the oven thermometer into a voltage and amplifies the signal for interpretation by a microprocessor. However, the digitalization of a signal supplied by a resistance thermal detector is widely used and does also not solve the above problems.

It is an object of the present invention to provide a fully flexible food probe management system allowing to adopt the desired sensor for each situation.

It is a further object to provide a cooking appliance, in particular an oven, comprising an electrical adapter and/or temperature probe allowing the oven appliance to be unchanged.

It is a still further object of the present invention to provide an electrical adapter and/or a temperature probe allowing the use of the existing system, i.e. a cooking appliance, particularly an oven, and control electronic thereof, with the sous-vide food probe.

The above objects of the invention are achieved by a cooking appliance, in particular an oven, comprising an electrical adapter according to claim 1, a temperature probe for a cooking appliance according to claim 12, and a method for electrically adapting a temperature sensor to an appliance according to claim 15.

An electrical adapter comprised in a cooking appliance, in particular an oven, according to claim 1 comprises

a) an electrical signal input for receiving at least one analog voltage input signal from a temperature sensor, particularly a meat thermometer,
b) an electrical signal output for providing an analog voltage output signal to an appliance, particularly a kitchen stove, and
c) an electrical signal converter for converting the input signal to the output signal, the signal converter electrically connected to both the signal input and the signal output and configured such that the output signal is inversely proportional to the input signal.

Such electrical adapter is based on the concept of creating the same behavior of a standard food probe or NTC-probe using sous-vide food probe, preferably comprising a thermocouple, while using a small circuit.

This electrical adapter can be realized, for example, integrally with the jack of such food probe. In an alternative embodiment, space is saved as such electrical adapter circuit is directly laced onto the food probe wire. This is generally possible, as the maximum operating temperature for sous-vide cooking is usually less than 100°C and, moreover, preferably, components can be applied having an extended range of temperature to, more preferably up to 125°C.

It will be immediately understood by a person skilled in the art that, for example, such electrical adapter reads a voltage value as an analog voltage input signal supplied by a temperature sensor, e.g. a thermocouple, first, and then select a value corresponding to the lowest temperature and convert it in the equivalent output signal, also referred to herein, preferably, as resistance value (ohm), provided if a standard probe with NCT was used instead of such thermocouple.

Another solution can be to generate this voltage drop using a resistance capacitor circuit driven by a PWM (pulse width modulation) signal avoiding to connect a resistance value.

Moreover, said value will, preferably, feed the oven electronic control with a coherent value, which advantageously allows using the current oven control system with standard or sous-wide food probe, respectively.

It will also be understood that such cooking appliance, in particular an oven, comprising an electrical adapter and/or such electrical adapter, in order to keep the existing oven control system as it is, has an electrical signal input for receiving an analog voltage input signal from a temperature sensor, particularly a meat thermometer, e.g. has to read the thermocouples signals as input signal, and further comprises an electrical signal converter for converting the input signal to the output signal, the signal converter electrically connected to both the signal input and the signal output and configured such that the output signal is inversely proportional to the input signal. In other words, this signal is elaborated and the corresponding value of resistance for an equivalent NTC is evaluated. Moreover, an analog voltage output signal is provided by an electrical signal output to an appliance, particularly a kitchen stove, e.g. by presenting a physical ohmic resistance as output.

According to the present invention an electrical adapter preferably comprises a circuit which is able to read a voltage input value supplied by e.g. a thermocouple, representing a certain temperature and more preferably, convert said voltage input value into a corresponding output signal, e.g. a resistance value.

It will be understood that this provides the possibility to use a standard food probe, such as NTC probe, and a sous-vide food probe, such as a thermocouple sensor with much smaller probe diameter, at the same stove. Preferably, the signal converter or conversion circuit reads the signal from e.g. the thermocouple chooses a corresponding output signal, e.g. resistance value of an equivalent NTC probe or the related voltage drop and presents the household appliance with a representative voltage output signal, e.g. ohmic resistance or the related voltage drop. The appliance then preferably uses this voltage output signal to control the cooking program, as if a NTC probe was used.

Such conversion circuit could be integrated into an adapter or the plug of the oven probe. The circuit might be self-powered, such as by harvesting energy within the heated oven, for example using a thermoelectric effect, preferably using a thermo element, thermocouple, Peltier element, Seebeck element or the like, or by means of a regular battery, or use the existing circuit on the oven's control board to drain energy. In the latter case, basically the concept is to use the pull up resistor that connects the control board to the standard NTC probe to drain current.

A thermocouple as used herein preferably comprises two dissimilar conductors contacting each other at least one spot. More preferably such thermocouple produces a voltage when a temperature of one of the at least one spots differs from a reference temperature at other parts of the circuit. Such thermocouples are a generally acknowledged and widely used type of temperature sensor for measurement and control, and are also able to convert a temperature gradient into electricity.

In a further preferred embodiment, an electrical adapter according to the present invention is located and/or fits in the socket used to plug the current probe.

In an advantageous embodiment of the inventive cooking appliance, the cooking appliance and/or the electrical adapter is for use in a low temperature cooking appliance, preferably for sous-vide cooking.

In a further advantages embodiment of the inventive cooking appliance, the cooking appliance and/or the electrical adapter is for use in a low temperature cooking method, preferably sous-vide cooking method.

In an advantageous embodiment of the inventive cooking appliance, the electrical adapter further comprises a thermoelectric generator for generating electrical energy based on a thermoelectric effect, particularly a Seebeck effect. In an advantageous embodiment of the inventive cooking appliance the thermoelectric effect is a Peltier effect.

In connection therewith it will be understood that an electric adapter according to the present invention preferably is self-powered, as a food probe might not be power supplied per se.

The Peltier effect as used herein, preferably means the presence of heating or cooling at an electrified junction of two different conductors. It will be understood, that when a current is made to flow through a junction between two conductors, heat may be generated, or removed, at the junction.

The Seebeck effect, as used herein, preferably refers to the conversion of temperature differences directly into electricity. The Seebeck effect, more preferably is an example of an electromotive force, also referred to herein as emf, which leads to measurable currents or voltages. In connection therewith, it should be acknowledged that the Seebeck effect modifies Ohm's law by generating currents even in the absence of voltage differences or vice versa.

Thereby the local current density is given by the following equation

$$\mathbf{J} = \sigma\left(-\nabla V + \mathbf{E}_{emf}\right),$$

wherein
V is the local voltage
and σ is the local conductivity.

In general, the Seebeck effect may be, preferably, described locally by the creation of an electromotive field according to the following equation

$$\mathbf{E}_{emf} = -S\nabla T,$$

wherein
*S* is the Seebeck coefficient, a property of the local material, and wherein VT is the gradient in temperature T. The Seebeck coefficients generally vary as function of temperature, and depend on the composition of the conductor.

However, it is within the present invention that a person skilled in the art will according to the desired effect and application vary and choose the specific arrangement of the conductors and/or the composition of the conductors accordingly.

In an advantageous embodiment of the inventive cooking appliance, the electrical adapter further comprises an electric battery for storing electrical energy or connected to the control board, draining power from the measuring circuit without any influence on the measured value.

In an advantageous embodiment of the inventive cooking appliance, the electrical adapter further comprises a circuit able to drain power from the oven control board, especially from the circuit design to measure the resistance value of the NTC.

Any energy harvesting system may in general be applied in connection with the cooking appliance and/or the electrical adapter according to the present invention, which, preferably, is able to supply the circuit without or in addition to a conventional energy source like a battery or external power supply, e.g. a pyroelectric energy harvesting and/or a thermoelectric energy harvesting.

It will be understood that using and power supply independent from an appliance structure, such as an oven structure, or appliance power supply, such as an oven power supply, it is possible to realize the cooking appliance comprising an electrical adapter and/or the electrical adapter without any changes in the existing appliance control system, e.g. an oven control system.

It will be understood that such electric battery for storing electrical energy, preferably, may be present in addition to or instead of a thermoelectric generator.

An electrical adapter according to the present invention preferably is configured such that the battery releases the electrical energy or the system starts to drain energy from control board when the signal output is connected to the appliance. In other words, to reduce the power consumption, e.g. a battery cell preferably supplies the electrical adapter only if the probe is plugged in the oven.

In connection therewith a microcontroller as described herein, preferably is a low-power type microcontroller.

In a further advantageous embodiment of the inventive cooking appliance, the electrical adapter further comprises a resin shell to house the converter, wherein the signal input and the signal output pervade the resin shell.

It will be understood that in case the complete circuit is sealed in a resin shell, preferably an ingress or IP protection rating is enhanced.

In a further advantageous embodiment of the inventive cooking appliance, the resin shell is formed such as to mechanically connect to a socket of the temperature sensor when the signal input is electrically connected to the temperature sensor.

In a further advantageous embodiment of the inventive cooking appliance, the electrical adapter further comprises an operational amplifier for amplifying the input signal, wherein the signal converter is electrically connected to the signal input via the amplifier.

It will be understood, that a signal input stage can be composed by a complex instrumentation amplifier. Preferably, at least a simple operational amplifier is used due to amplify the signal from at least 10-fold to 100-fold, preferably 10-fold or 100-fold, in order to raise the signal noise ratio and in order to feed the signal converter, e.g. elaboration block with a better signal.

In a further advantageous embodiment of the inventive cooking appliance, the electrical adapter further comprises a signal processing circuit for filtering and/or elaborating the input signal, keeping it in an analog form or converting it into a digital form, wherein the signal converter is electrically connected to the signal input via the signal processing circuit.

In a further advantageous embodiment of the inventive cooking appliance, the electrical adapter further comprises a passive electronic filter for filtering the input signal, wherein the signal converter is electrically connected to the signal input via the filter.

It will be also understood, that a signal input stage can be downgraded to a passive filter to reduce the noise according to the ADC of the microcontroller in the signal converter. Preferably, at least a simple operational amplifier is used due to amplify the signal from at least 10-fold to 100-fold, preferably 10-fold or 100-fold, in order to raise the signal noise ratio and in order to feed the signal converter, e.g. elaboration block with a better signal.

An ADC, also referred to herein as an analog-to-digital converter preferably is a device capable of converting a continuous physical quantity, e.g. a voltage, to a digital number that represents the quantity's amplitude.

In a further advantageous embodiment of the inventive cooking appliance, the converter comprises a microcontroller for controlling the output signal in response to the input signal and/or an amplifier for amplifying the signal.

In a further advantageous embodiment of the inventive cooking appliance, the electrical adapter, more preferably the microcontroller and an amplifier, is configured such that the input signal ranges from about 1.2 mV to about 4 mV.

In a further advantageous embodiment of the inventive cooking appliance, the electrical adapter, more preferably the microcontroller and an amplifier, is further configured such that the input signal increases by the related voltage value according with the Seebeck effect when the input signal indicates a temperature increase of 1 °C.

The above described problems are also advantageously solved by a temperature probe for a cooking appliance according to claim 12.

Such a temperature probe comprises

a) a temperature sensor for providing an analog voltage input signal proportional to an ambient temperature of the temperature probe and

b) an electrical adapter according to any of the preceding claims for adapting the temperature sensor to the appliance, the signal input electrically connected to the temperature sensor, wherein the cooking appliance, more preferably, is a cooking appliance according to the present invention.

In an advantageous embodiment of the inventive temperature probe the temperature sensor comprises a thermocouple.

In an advantageous embodiment of the inventive temperature probe said probe comprises a probe plug to interface the probe with an appliance and/or a probe handle to handle the probe by the user. Preferably, the probe plug and/or the probe handle comprises the electrical adapter and/or at least a part thereof and/or at least a part of an electronic circuit thereof. The probe handle, preferably is manufactured from a heat resistant material. This allows the user to safely touch the temperature probe without risking to be burned.

In an advantageous embodiment of the inventive temperature probe the temperature sensor takes the form of a meat thermometer.

In an advantageous embodiment of the inventive temperature probe said probe comprises a needle, more preferably said needle being suitable for inserting said needle into a food stuff, such as a piece of meat. Such said needle, preferably, comprises at least a part of the electrical adapter, more preferably, said needle comprises a circuit which is able to read a voltage input value supplied, e.g. a thermocouple.

Advantageously, such temperature probe, more particularly a needle of such temperature probe, can be inserted into the food stuff through a pouch or bag, e.g. vacuum bag, and can be provided to determine the temperature of the food stuff directly.

In a preferred embodiment the temperature probe according to the present invention comprises a vacuum preservation.

To prevent gas or liquid from entering the punctured bag, the food probe can be inserted through said vacuum preservation, e.g. a pad or, tape or cushion, e.g. a closed cell foam tape, e.g. of neoprene or polychloroprene. It will be immediately understood that such pad or, tape or cushion is capable to self-repair the punctured pouch.

In a preferred embodiment the temperature probe according to the present invention comprises a sharp end, preferably where the temperature probe comprises a needle, said needle has said sharp end, more preferably at its tip. Such sharp end allows an easy injection of said needle into a food stuff and/or through a vacuum bag.

In an advantages embodiment of the inventive temperature probe, the inventive temperature probe is for use in a low temperature cooking appliance, preferably for sous-vide cooking.

In a further advantages embodiment of the inventive temperature probe, the inventive temperature probe is for use in a low temperature cooking method, preferably sous-vide cooking method.

It will be understood that the inventive temperature probe can preferably be inserted into the food stuff, e.g. piece of meat, also through a vacuum sealed pouch. To prevent gas or liquid from entering the punctured bag, the food probe can preferably be inserted through, e.g. a closed cell foam tape, capable to self-repair the punctured pouch.

The above described problems are also advantageously solved by a method for electrically adapting a temperature sensor to an appliance according to claim 15.

Such method comprises:

a) receiving an analog voltage input signal from the temperature sensor,
b) converting the input signal to an analog voltage output signal inversely proportional to the input signal, and
c) providing the output signal to the appliance,

wherein the cooking appliance, more preferably, is a cooking appliance according to the present invention.

In an advantages embodiment of the inventive method, the inventive method is carried out in a low temperature cooking appliance, preferably for sous-vide cooking.

In an advantages embodiment of the inventive method, the inventive method is carried out concomitantly with a low temperature cooking method, preferably sous-vide cooking method. More preferably, the inventive method is for controlling and/or operating such low temperature cooking method, preferably sous-vide cooking method.

All described embodiments of the invention have the advantage, that use of the existing system, i.e. oven and control electronic is allowed with both, a standard food probe and the sous-vide food probe. It will be immediately understood, that this approach moves the cost for a sous-vide application from the oven appliance to the food probe itself allowing to provide a "standard oven" with a common food probe and further provide as an alternative equipment the special sous-vide food probe.

The present inventors have surprisingly found that the electrical adapter according to the present invention, the temperature probe according to the present invention and the method according to the present invention provide a way to use both probes in a current oven system without any changes required, and moreover allow the complete reuse of such existing system and allow for a flexible food-probe sensor selection, an NTC to thermocouple converter circuit, an automatic probe type recognition and an energy harvesting system for power supply.

The present invention will be described in further detail with reference to the drawings, in which

FIG 1    illustrates a block diagram of an electrical adapter showing a first inventive embodiment;

FIG 2    illustrates a schematic drawing of in a meat probe tool comprising an electrical adapter according to the first inventive embodiment;

FIG 3    illustrates a schematic drawing of a part of a kitchen appliance and a meat probe tool comprising an electrical adapter according to the first inventive embodiment;

FIG 4    illustrates a block diagram of an electrical adapter showing a second inventive embodiment; and

FIG 5    illustrates a block diagram of an electrical adapter showing a third inventive embodiment.

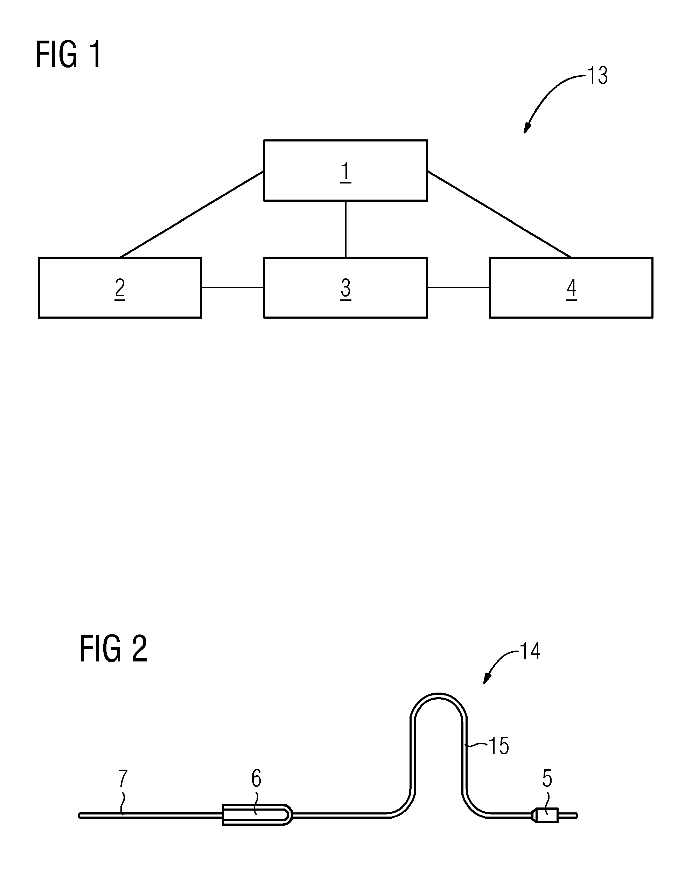

FIG 1 shows a block diagram of an electrical adapter 13 according to the present invention.

Such electrical adapter 13 according to the present invention comprises an electrical signal input 2 for receiving an analog voltage input signal from a temperature sensor, e.g. an input stage 2, also referred to herein as an "analog input stage", allowing to read a thermocouple 16, particularly a meat thermometer. Of course, the system can have more than one sensor (e.g. thermocouple) connected so this stage has to be able to handle all of them. The complexity of this part can be trimmed depending on the signal convertor 3, also called herein the elaboration part, or in order to take over the task of analog reading, sending the digitized information to the elaboration part to split the complexity between these two devices, supervising the whole adapter. Its main tasks are:

• measure the analog value of the input signal (e.g. thermocouple) or get the digitized information from the input stage 2
• Manage the power supply 1 switching off the system to save power
• Control the output stage 4 in order to generate the appropriate output value.

Such adapter 13 further comprises an electrical signal output 4 for providing an analog voltage output signal to an appliance 12. As described in the input stage 2, the complexity of this stage can be trimmed in order to remove it from the elaboration part 3 to allow using a resistor net or digital potentiometer or resistance capacitor circuit capable of generating the correct analog voltage according to the management implemented on the elaboration unit 3. Particularly a kitchen stove, and the elaboration unit or microcontroller 3 for converting the input signal to the output signal, in order to manage them, the signal converter 3 electrically connected to both the signal input 2 and the signal output 4, as depicted by the connecting lines in FIG 1, and configured such that the output signal is inversely proportional to the input signal.

It will be immediately understood by a skilled person, that the system can advantageously be connected to more than one input.

The signal input or inputs 2, e.g. the signal input stage for a thermocouple 16, can be composed by a complex instrumentation amplifier or can be downgraded to a passive filter to reduce the noise according to the ADC of the microcontroller in the signal converter 3. Preferably, at least a simple operational amplifier is used due to amplify the signal from at least 10-fold to 100-fold, preferably 10-fold or 100-fold, in order to raise the signal noise ratio and in order to feed the signal converter 3, e.g. elaboration block with a better signal.

Another option is to increase the complexity of this system, thus reducing the complexity of the signal converter, which will obtain the digitized information of the input analog value without any complex measurement.

The signal converter 3, preferably, comprises a microcontroller for controlling the output signal in response to the input signal. In other words, the signal converter 3 preferably is composed by a microcontroller identifying a lowest temperature measured by e.g. the thermocouples 16 and performs the conversion between the voltage value and the resistance value. It will be understood that such microcontroller preferably has an internal ADC capable to read the thermocouples 16 signals or a communication bus to exchange data with a smarter signal input stage 2.

It will also be understood, if a simple input stage is used, that focusing on the measurement in the microcontroller using a high performances ADC is possible, preferably using and/or managing a voltage of about 40 $\mu$V/°C fixing the range of between minimum about 1200 $\mu$V, preferably for 30°C, to a maximum value of about 4000 $\mu$V, preferably for 100°C. In order to fulfill this requirement the microcontroller preferably has to be equipped with a high performance ADC.

In connection therewith, it is to be understood that preferably an amplification of the signal in the input stage 2 will reduce the performance required by ADC. As an example, at least a simple amplifier as described herein used with the right circuit is preferred and allows the use of a less cost intensive microcontroller having, preferably a standard ADC. In accordance therewith, it will be understood that preferably said solution advantageously moves the costs from the microcontroller to the signal input stage 2.

The microcontroller preferably is configured such that the input signal ranges from 1.2 mV to 4 mV. More preferably, the microcontroller is further configured such that the input signal increases by the related voltage value according with the Seebeck effect when the input signal indicates a temperature increase of 1 °C.

An inventive adapter 13 according to the present invention preferably further comprises a power supply 1, more preferably an electric battery 1, or a system able to drain current from the measuring circuit in the power board without any influence on the analog measurement, for storing electrical energy.

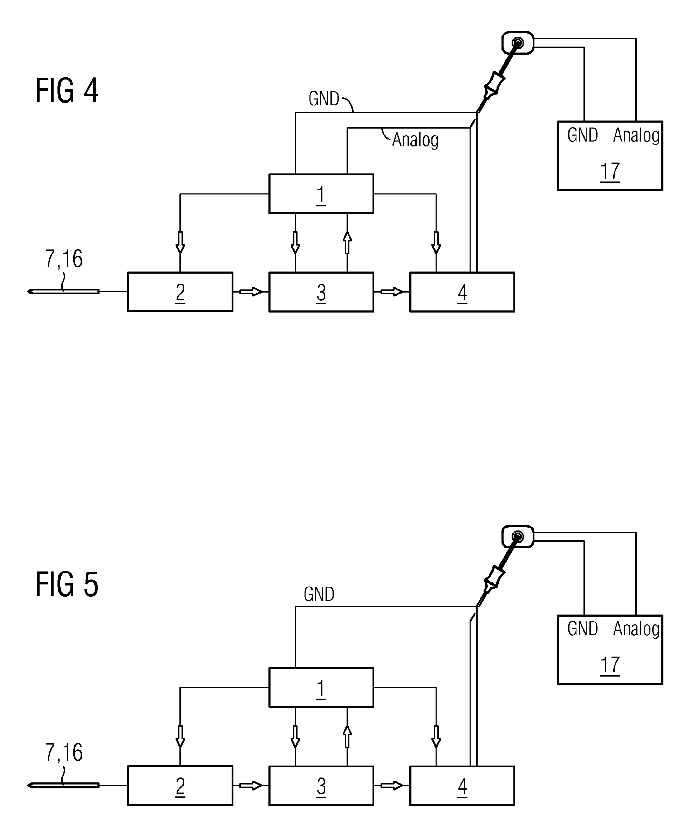

FIG 4 and FIG5 represent a system overview block diagram for each of said possibilities.

More particularly, FIG 4 shows an overview for power supply from the control board 17 and FIG 5 shows an overview for power supply from a battery, here reflecting also the energy harvesting.

Particularly, a battery-less approach is preferred that supplies the electrical adapter 13.

An inventive adapter 13 preferably is configured such that the battery releases the electrical energy when the signal output is connected to the appliance. In other words, to reduce the power consumption, e.g. a battery cell preferably supplies the electrical adapter 13 only if the probe is plugged in the oven.

In connection therewith a microcontroller as described herein, preferably is a low power type microcontroller.

In an advantageous embodiment of the inventive adapter 13, the adapter 13 further comprises a pyroelectric element.

Any energy harvesting system may in general be applied in connection with the electrical adapter 13 according to the present invention which is able to supply the circuit without or in addition to a conventional energy source like a battery 1 or external power supply 1, e.g. a pyroelectric energy harvesting and/or a thermoelectric energy harvesting.

Using an independent power supply 1 it is, of course, possible to realize the circuit and/or electrical adapter 13 without any changes in the existing oven control system

A signal output stage 4 is, preferably composed by a digital potentiometer driven by e.g. a microcontroller according to the required resistance value.

It will be understood that an output signal as used herein, preferably defines such resistance value.

Such signal output stage 4 preferably comprises a serial bus allowing e.g. a microcontroller to control a chip, and more preferably, a variable resistor able to regulate a resistance from about 0 to about 50K ohm, more preferably with 1024 steps according to the value transmitted by such microcontroller. This preferably reflects a minimum resolution of 48 ohm while the NTC characteristic need a minimum increment of 135 ohm.

Another approach is to increase the complexity of this stage using a resistance/capacitor circuit manipulated by a pulse width modulated signal generated by the microcontroller 2, in order to create the correct voltage representing the voltage dropped on the equivalent NTC resistor.

This solution is the best choice if the power supply 1 drains power from the control board 17 measuring circuit.

By way of an example of such circuit and /or electrical adapter 13 a thermocouple 16 in a needle detects a temperature of e.g. 60°C reflecting a voltage of 2400 uV, i.e. 2.4 mV. Accordingly, the input signal stage raises said value one hundred times to accordingly 240mV, Moreover, the signal converter converts said input signal to an output signal, i.e. the corresponding resistance value for 60°C being 12140 ohm. Sending said value to a digital potentiometer, the most similar value to 12140 ohm with a step of 48 ohm is e.g. 12109. The digital potentiometer thus regulates the output resistance to 12109.

Such electrical adaptor 13 according to the present invention is advantageously placed in a temperature probe 14 for a cooking appliance 12, preferably an oven. The electronic circuit of the electrical adapter 13 as described by the block diagram in Fig 1 is advantageously placed in a probe plug 5 and/or a probe handle 6 of said temperature probe 14.

Such temperature probe 14 according to the present invention is schematically shown in FIG. 2 and comprises a temperature sensor for providing an analog voltage input signal proportional to an ambient temperature of the temperature probe and the electrical adapter 13 according to the first inventive embodiment for adapting the temperature sensor to the appliance 12, the signal input 2 electrically connected to the temperature sensor, wherein the cooking appliance 12, more preferably, is a cooking appliance according to the present invention.

The temperature sensor comprises some thermocouples 16, here located in the probe needle 7, the probe needle having the form of a meat thermometer and being equipped with a probe handle 6. Said handle 6 is connectable to an appliance 12 via a probe wire 15 and a probe plug 5 at the free end of the probe wire 15.

The handle of the probe 6 may comprise or form a housing comprising electronic elements of the adapter 13. Accordingly, such handle 6 may comprise a power supply 1, e.g. battery, or at least a part thereof, a signal input 2, e.g. an input stage for thermocouple, or at least a part thereof, a signal converter 3, e.g. a microcontroller 3, or at least a part thereof, and a signal output 4, variable resistor or at least a part thereof.

In connection therewith it will be immediately understood that also the plug 5 may form a housing and may further comprise parts of the electronic elements of the adapter 13.

Accordingly, all major elements may be advantageously comprised by the handle 6 and/or by the plug 5.

In connection therewith it is of particular advantage that the probe plug 5 comprises the power supply 1 and/or at least parts of a power supply circuit. Further parts of the power supply 1 and/or the power supply circuit may be comprised in the handle 6.

It is also of advantage that the plug located at the end of the wire 15 forms a connector to interface the probe with an appliance 12, such as an oven, e.g. as a power board connection.

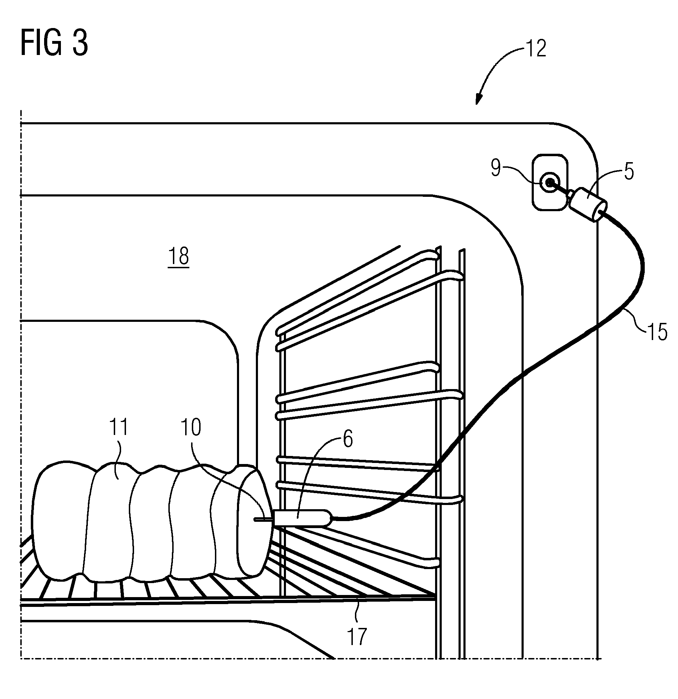

Such temperature probe 14 may be connected to an appliance 12 according to the present invention as shown in Fig. 3.

Here, the appliance 12, particularly is an appliance, such as an oven, for low temperature cooking and/or for sous-vide cooking, the appliance 12 comprising a cavity 18 in which a rack 17 is placed. On said rack 17 a good, here food stuff vacuum packed in a vacuum bag 11 is placed, preferably in a defined position, in the cavity 18.

The temperature probe 14 is guided through the packaging of said food stuff 11. By inserting the needle 7 at a needle insertion point 10 into the vacuum bag 11, the needle being injected into the food stuff and/or being in direct contact to said food stuff. This allows to measure the temperature of said food stuff without opening the vacuum bag 11.

As shown in Fig. 3 the temperature probe 14 is to be connected with the appliance 12 by inserting the probe plug 5 into an appliance socket 9.

With the above setting the inventive method for electrically adapting a temperature sensor to a cooking appliance 12, preferably an oven, may be carried out comprising a step of receiving an analog voltage input signal from the temperature sensor, a step of converting the input signal to an analog voltage output signal inversely proportional to the input signal, and providing the output signal to the cooking appliance 12.

This particularly allows to control the temperature of a food stuff placed in said oven for cooking.

With the inventive cooking appliance according to the present invention and/or the inventive temperature probe according to the present invention a cooking method, preferably a low temperature cooking method, more preferably a sous-vide cooking method, may be advantageously carried out, the method comprising at least the following steps: placing a good, preferably a packed food stuff 11, more preferably a vacuum packed food stuff 11, in a cavity 18 of an appliance 12, the appliance being, preferably, for low temperature cooking, more preferably for sous-vide cooking. A temperature probe 14 is placed or arranged in the cavity 18 of the appliance, preferably by a step of inserting the temperature probe 14 into the food stuff. The method further comprises a heating step comprising heating up the cavity 18 until the cavity center has reached a defined temperature, e.g. by heating water to the defined temperature and ejecting the water from a water ejection means into the cavity 18 ; a maintaining step comprising maintaining said cavity 18 at said defined temperature of the cavity center, e.g. by heating water to the defined temperature and ejecting the water into the cavity 18, over a certain period of time while said defined temperature of the cavity center, preferably, is not allowed to vary more than +/- 1,5°C; wherein at least during said heating step and said maintaining step the actual temperature of the cavity center is determined by a control unit of the appliance 12 by means of an algorithm that is based on the temperature values measured by the temperature probe 14 within the cavity 18 and wherein said actual temperature is used to operate a heating unit such, that said defined temperature of the cavity center is reached or maintained.

The features of the present invention disclosed in the specification, the claims, and/or the figures may both separately and in any combination thereof be material for realizing the invention in various forms thereof.

**List of reference numerals**

1 power supply
2 signal input
3 signal converter
4 signal output
5 Probe plug
6 probe handle
7 probe needle
8 connection
9 appliance socket
10 needle insertion point
11 vacuum bag
12 cooking appliance
13 electrical adapter
14 temperature probe
15 probe wire
16 thermocouples
17 control board
18 cavity

**Claims**

1. A Cooking appliance (12), in particular an oven, comprising an electrical adapter (13), the electrical adapter (13) comprising

   a) an electrical signal input (2) for receiving at least one analog voltage input signal from a temperature sensor, particularly a meat thermometer,
   b) an electrical signal output (4) for providing an analog voltage output signal to an appliance (12), particularly a kitchen stove, and
   c) an electrical signal converter (3) for converting the input signal to the output signal, the signal converter (3) electrically connected to both the signal input (2) and the signal output (4) and configured such that the output signal is inversely proportional to the input signal.

2. The cooking appliance (12) according to claim 1, the electrical adapter (13) further comprising a thermoelectric generator for generating electrical energy based on a thermoelectric effect, particularly a Seebeck effect.

3. The cooking appliance (12) according to claim 1 or 2, the electrical adapter (13) further comprising an electric battery (1) for storing electrical energy or connected to the control board (17) draining power from the measuring circuit without any influence on the measured value.

4. The cooking appliance (12) according to claim 3, wherein the electrical adapter (13) is configured such that the battery (1) releases the electrical energy or the system starts to drain energy from control board (17) when the signal output (4) is connected to the appliance (12).

5. The cooking appliance (12) according to any of the preceding claims, wherein the electrical adapter (13) further comprises a resin shell to house the converter (3), wherein the signal input (2) and the signal output (4) pervade the resin shell.

6. The cooking appliance (12) according to claim 5 wherein the resin shell is formed such as to mechanically connect to a socket of the temperature sensor when the signal input (2) is electrically connected to the temperature sensor.

7. The cooking appliance (12) according to any of the preceding claims, wherein the electrical adapter (13) further comprises an operational amplifier for amplifying the input signal, wherein the signal converter (3) is electrically connected to the signal input (2) via the amplifier.

8. The cooking appliance (12) according to any of the preceding claims, wherein the electrical adapter (13) further comprises a signal processing circuit for filtering and/or elaborating the input signal, keeping it in an analog form or converting it into a digital form, wherein the signal converter (3) is electrically connected to the signal input (2) via the signal processing circuit.

9. The cooking appliance (12) according to any of the preceding claims wherein the converter (3) comprises a microcontroller for controlling the output signal in response to the input signal and/or an amplifier for amplifying the signal.

10. The cooking appliance (12) according to claim 9 wherein the electrical adapter, more preferably the microcontroller and the amplifier, is configured such that the inputsignal ranges from about 1.2 mV to about 4 mV.

11. The cooking appliance (12) according to claim 10 wherein the electrical adapter, more preferably the microcontroller and the amplifier, is further configured such that the input signal increases by the related voltage value according with the Seebeck effect when the input signal indicates a temperature increase of 1 °C.

12. A temperature probe (14) for a cooking appliance (12), preferably an oven, comprising

   a) a temperature sensor for providing an analog voltage input signal proportional to an ambient temperature of the temperature probe (14) and
   b) an electrical adapter (13) according to any of the preceding claims for adapting the temperature sensor to the appliance (12), the signal input (2) electrically connected to the temperature sensor,

   wherein the cooking appliance (12), more preferably, is a cooking appliance according to any one of claims 1 to 11.

13. The temperature probe (14) according to claim 12 wherein the temperature sensor comprises a thermocouple (16).

14. The temperature probe (14) according to claim 12 or 13 wherein the temperature sensor takes the form of a meat thermometer.

15. A method for electrically adapting a temperature sensor to a cooking appliance (12), preferably an oven, comprising

   a) receiving an analog voltage input signal from the temperature sensor,
   b) converting the input signal to an analog voltage output signal inversely proportional to the input signal, and
   c) providing the output signal to the cooking appliance (12),

   wherein, more preferably, the cooking appliance (12) is a cooking appliance according to any one of claims 1 to 11.

FIG 1

FIG 2

# FIG 3

FIG 4

GND

Analog

1

7,16

2     3     4

GND   Analog

17

FIG 5

GND

1

7,16

2     3     4

GND   Analog

17

Europäisches
Patentamt

European
Patent Office

Office européen
des brevets

## EUROPEAN SEARCH REPORT

Application Number

EP 14 17 8727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | FR 2 877 085 A1 (CONST ISOTHRMIQUES BONTAMI C I [FR]) 28 April 2006 (2006-04-28) * page 1, lines 6-11; figure 1 * * page 4, lines 31-33 * * page 5, lines 5-9,22-26 * * page 5, line 31 - page 6, line 2 * * page 6, lines 1-4,18-21 * ----- | 1-15 | INV. G01K7/14 |
| Y | US 5 735 605 A (BLALOCK ALLEN V [US]) 7 April 1998 (1998-04-07) * abstract; figures 1,2 * * column 1, lines 5-12 * * column 2, lines 36-45 * ----- | 1-15 | |
| A | US 2007/268957 A1 (KOVACEVICH STEVEN ANTHONY [US]) 22 November 2007 (2007-11-22) * paragraphs [0007], [0008], [0009] * ----- | 1-15 | |
| A | US 4 669 049 A (KOSEDNAR JOSEPH F [US] ET AL) 26 May 1987 (1987-05-26) * the whole document * ----- | 1-15 | TECHNICAL FIELDS SEARCHED (IPC) G01K |

| | | | |
|---|---|---|---|
| The present search report has been drawn up for all claims | | | |
| Place of search | Date of completion of the search | | Examiner |
| The Hague | 19 December 2014 | | Phleps, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 17 8727

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2014

| Patent document cited in search report | | Publication date | Patent family member(s) | | Publication date |
|---|---|---|---|---|---|
| FR 2877085 | A1 | 28-04-2006 | NONE | | |
| US 5735605 | A | 07-04-1998 | NONE | | |
| US 2007268957 | A1 | 22-11-2007 | AT | 12807 U1 | 15-12-2012 |
| | | | AT | 544056 T | 15-02-2012 |
| | | | DE 202007019316 U1 | | 26-10-2011 |
| | | | EP | 2027443 A2 | 25-02-2009 |
| | | | JP | 4830021 B2 | 07-12-2011 |
| | | | JP | 2009537848 A | 29-10-2009 |
| | | | US | 2007268957 A1 | 22-11-2007 |
| | | | WO | 2007136855 A2 | 29-11-2007 |
| US 4669049 | A | 26-05-1987 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2877085 A

- US 5705792 A1